# FASCICULE DE BREVET EUROPEEN

(11) **EP 3 933 182 B1**
(45) Date de publication et mention de la délivrance du brevet: **28.02.2024**
(21) Numéro de dépôt: 21170514.0
(22) Date de dépôt: 26.04.2021
(51) Int. Cl.: F02C 7/055, B64D 33/02, F02C 7/052

(54) **SYSTEME ET PROCEDE DE FILTRATION D'AIR À MEDIA FILTRANT AUTONETTOYANT POUR UN MOTEUR D'UN AERONEF**
SYSTEM UND VERFAHREN ZUR LUFTFILTERUNG MIT SELBSTREINIGENDEN FILTERMEDIEN FÜR EINEN LUFTFAHRZEUGMOTOR
SYSTEM AND METHOD FOR FILTERING AIR WITH A SELF-CLEANING FILTERING MEDIUM FOR AN ENGINE OF AN AIRCRAFT

(30) Priorité: 30.06.2020 FR 2006839
(43) Date de publication de la demande: 05.01.2022
(73) Titulaire: Airbus Helicopters, 13725 Marignane Cedex (FR)
(72) Inventeur: FAYARD, Benoît, 13250 SAINT CHAMAS (FR)
(74) Mandataire: GPI Brevets

(56) Documents cités:
- FR-A1- 2 250 671
- FR-A1- 2 904 046
- US-A- 2 407 194
- US-A1- 2018 208 323

## Description

La présente invention concerne un système et un procédé de filtration d'air à média filtrant autonettoyant pour filtrer un comburant d'un moteur d'un aéronef, et par exemple au sein d'un giravion.

En effet, un aéronef est usuellement muni d'une installation motrice comprenant au moins un moteur à combustion alimenté en air par une entrée d'air. Pour diriger de l'air dans cette entrée d'air, l'aéronef peut comporter un système d'alimentation en air mettant en communication fluidique un milieu extérieur à l'aéronef et l'entrée d'air du moteur.

Un premier type d'alimentation en air est qualifié de dynamique. Un système d'alimentation en air dynamique comporte une bouche d'air dirigée selon le sens d'avancement de l'aéronef pour être alimentée en air extérieur sous l'effet d'une part de la vitesse d'avancement de l'aéronef et du vent et, d'autre part, de l'aspiration d'air réalisée par le moteur en fonctionnement.

Un deuxième type d'alimentation en air est qualifié de statique. Un système d'alimentation en air statique est uniquement alimenté en air sous l'effet de l'aspiration d'air réalisée par le moteur en fonctionnement.

Ces deux types d'alimentation en air peuvent être combinés au sein d'un même système d'alimentation en air.

En outre, des « polluants » tels que la poussière, le sable, la neige, le givre sont susceptibles de pénétrer dans un système d'alimentation en air. Ces polluants sont susceptibles de dégrader les performances du moteur par érosion ou colmatage.

Dès lors, un dispositif de filtration d'air peut équiper un système d'alimentation en air pour au moins limiter l'ingestion de polluants.

Deux types connus de dispositifs de filtration sont efficaces pour les polluants de petites dimensions, à savoir les dispositifs de type filtre à particules à vortex ou encore de type filtre à barrière.

Un dispositif de filtration de type filtre à barrière est aussi connu sous l'expression anglaise « Inlet barrier Filter ». Un dispositif de filtration de type filtre à barrière comporte un filtre dénommé « média filtrant ». Un tel média filtrant comporte une barrière poreuse. Des passages de petites dimensions traversent la barrière poreuse de part en part selon son épaisseur. Ces passages empêchent des objets présentant des dimensions supérieures aux dimensions des passages de traverser la barrière. Par exemple, un média filtrant peut comprendre une ou plusieurs couches de fibres, telles que des fibres de coton ou des fibres synthétiques, chaque couche étant éventuellement pliée en accordéon pour maximiser sa surface de filtration. L'air passe alors au travers du média filtrant, les polluants qui ne peuvent pas traverser un passage restant bloqués contre une face extérieure du média filtrant. Dès lors, un dispositif de filtration à média filtrant est très efficace. Toutefois, le média filtrant génère de fait des pertes d'installation qui sont fonction de son colmatage.

Diverses techniques permettent d'évaluer le colmatage d'un média filtrant. Par exemple, le document WO2018200941 divulgue un dispositif de mesure de pression.

Lorsque le média filtrant est colmaté, une action de maintenance est entreprise pour le remplacer. Au sein d'un aéronef, le colmatage du média filtrant varie de fait en fonction des conditions environnementales rencontrées et de l'utilisation de l'aéronef. Par exemple, un média filtrant qui filtre l'air en amont d'un moteur d'un hélicoptère tend à être plus rapidement colmaté lorsque l'hélicoptère vole à faibles vitesses dans de l'air chargé en sable. Dès lors, la durée de vie d'un média filtrant est variable en fonction de son utilisation et peut être relativement courte dans des conditions extrêmes.

L'invention vise à optimiser cette durée de vie.

Le document FR 2 904 046 ne répond pas à cette problématique en décrivant un système d'alimentation en air combiné dépourvu d'un média filtrant. Ce système d'alimentation en air comporte une bouche d'entrée d'air dynamique débouchant sur un conduit. La bouche d'entrée d'air dynamique est apte à être obturée par un moyen d'obturation et est équipée d'une grille. De plus, le système d'alimentation en air comporte une entrée filtrante munie d'une pluralité de filtres à particules à vortex, l'entrée filtrante débouchant sur le conduit.

De même, le document FR 2 906 569 décrit un système d'alimentation en air comprenant au moins une entrée d'air radiale filtrante ayant des filtres à particules à vortex et une entrée d'air radiale non filtrante, lesdites entrées d'air radiales filtrante et non filtrante étant agencées autour d'un turbomoteur. Un moyen d'obturation déplaçable est configuré pour obturer l'une après l'autre lesdites entrées d'air radiales filtrante et non filtrante.

Le document FR 2 924 471 décrit un système d'alimentation en air ayant une section d'entrée d'air. Un dispositif de filtration comporte un moyen de filtrage pliable agencé au niveau de la section d'entrée d'air et un moyen de commande qui exerce un effort sur ledit moyen de filtrage de manière à régler le pouvoir de filtration du système de filtration.

Le document FR 2 952 401 décrit aussi un système d'alimentation en air dépourvu d'un média filtrant. Ce système d'alimentation en air comporte un conduit d'entrée d'air dynamique pourvu d'une grille de protection contre l'ingestion de corps extérieurs. La grille est apte à effectuer une translation par rapport au conduit d'entrée d'air dynamique en fonction de son colmatage. De plus, le système d'alimentation en air comporte une entrée latérale et un moyen d'obturation de ladite entrée latérale commandé par ladite translation de la grille.

Le document EP 1 326 698 décrit un système de nettoyage à jet pulsé orienté pour diriger une pulsation d'air dans une chambre à air propre interne à une construction de filtre.

Le document FR 2 250 671 A1 décrit un système d'alimentation en air configuré pour alimenter en air un moteur. Ce système d'alimentation en air comporte une ogive mobile et un dispositif de filtration à séparation par inertie.

Le document US 2 407 194 A est aussi connu. Le document US 2018/208323 divulgue une entrée d'air selon l'art antérieur.

La présente invention a alors pour objet de proposer un procédé et un système d'alimentation en air à média filtrant, favorablement relativement léger, visant à optimiser la durée de vie du média filtrant.

Ainsi, l'invention vise un procédé pour alimenter en air un moteur, notamment à combustion, d'un aéronef selon un débit d'alimentation en air via un système d'alimentation en air de l'aéronef, ledit système d'alimentation en air comprenant une bouche d'entrée d'air dynamique qui est obturable par un obturateur, ledit obturateur étant mobile entre une position fermée dans laquelle l'obturateur obture ladite bouche d'entrée d'air dynamique et une position ouverte dans laquelle l'obturateur n'obture pas ladite bouche d'entrée d'air dynamique, ledit système d'alimentation en air comprenant une bouche d'entrée d'air statique munie d'un dispositif de filtration, ledit obturateur étant dans la position fermée durant un mode de fonctionnement filtré pendant lequel un air d'un milieu extérieur situé à l'extérieur de l'aéronef est filtré par le dispositif de filtration.

Le dispositif de filtration comportant un média filtrant, ce procédé comporte en vol un mode de fonctionnement non filtré qui comprend les étapes suivantes :
- positionnement dudit obturateur dans la position ouverte, pour ne plus obturer la bouche d'entrée d'air dynamique, et
- durant une phase d'avancement de l'aéronef, admission dynamique d'un flux d'air sous l'effet dudit avancement de l'aéronef par la bouche d'entrée d'air dynamique selon un débit d'entrée d'air supérieur à un débit minimum nécessaire pour obtenir ledit débit d'alimentation en air, puis
- transfert d'une première partie dudit flux d'air vers ledit moteur et transfert d'une deuxième partie dudit flux d'air vers le média filtrant, ladite deuxième partie dudit flux d'air traversant le média filtrant pour rejoindre le milieu extérieur à des fins de nettoyage du média filtrant.

L'expression « admission dynamique d'un flux d'air sous l'effet dudit avancement de l'aéronef par la bouche d'entrée d'air dynamique » signifie que le flux d'air pénètre dans le système d'alimentation en air par la bouche d'entrée d'air dynamique au moins sous l'effet de l'avancement de l'aéronef, voire aussi de l'aspiration d'un moteur.

L'expression « entre une position fermée dans laquelle l'obturateur obture ladite bouche d'entrée d'air dynamique et une position ouverte » signifie que l'obturateur peut être déplacé de la position ouverte à la position fermée et de la position fermée à la position ouverte. Des positions intermédiaires peuvent éventuellement être atteintes, l'obturateur restant agencé dans de telles positions intermédiaires au moins temporairement.

Dans ce contexte, le système d'alimentation en air peut être soit dans un mode de fonctionnement filtré durant lequel l'obturateur est dans la position fermée, soit dans un mode de fonctionnement non filtré durant lequel l'obturateur est dans la position ouverte.

Durant le mode de fonctionnement filtré, l'air situé dans le milieu extérieur traverse le média filtrant selon un sens, dit « sens de filtration » par commodité, allant d'une face externe du média filtrant en contact avec le milieu extérieur vers une face interne du média filtrant. Les polluants éventuels de l'air sont bloqués par le média filtrant au niveau de sa face externe, dans les limites de fonctionnement de ce média filtrant évidemment. L'air nettoyé de polluants éventuels est ensuite canalisé vers le moteur par le système d'alimentation en air. Le média filtrant remplit sa fonction en tendant à éviter l'ingestion de polluants potentiellement gênants par le moteur, tels que par exemple de la poussière, de la terre ou du sable.

Selon l'invention, le procédé comporte de plus un mode de fonctionnement non filtré incluant une phase d'alimentation en air et de nettoyage automatique du média filtrant, le média filtrant étant immobile, qui est mise en oeuvre durant une phase de vol dite « phase d'avancement de l'aéronef ». Une telle phase d'avancement est, par exemple une phase de déplacement de l'aéronef au moins vers l'avant selon un sens allant de la queue vers un nez de l'aéronef. Lorsque cette phase d'alimentation en air et de nettoyage du média filtrant est mise en oeuvre, l'obturateur est placé dans sa position ouverte. En raison de l'avancement de l'aéronef, une veine d'acheminement d'air du système d'alimentation en air est gavée d'air par la bouche d'entrée d'air dynamique. En particulier, la bouche d'entrée d'air dynamique est de manière innovante surdimensionnée pour capter plus d'air que nécessaire pour obtenir le débit d'alimentation en air voulu par le moteur. La bouche d'entrée d'air dynamique peut être dimensionnée de manière usuelle, par calculs et/ou simulations et/ou tests, pour permettre l'obtention d'un débit supérieur à un débit d'alimentation en air prédéterminé spécifié pour le moteur. En raison au moins de la différence de débit entre le débit d'entrée d'air réel et le débit minimum nécessaire pour alimenter le moteur, une première partie du flux d'air est acheminée vers le moteur et aspirée par ce moteur alors qu'une deuxième partie de ce flux d'air est refoulée en dehors du système d'alimentation en air par le seul chemin possible. En particulier, cette deuxième partie du flux d'air admis traverse le média filtrant selon un sens contraire au sens de filtration précédemment décrit. Ainsi, les polluants éventuels captés préalablement par la face externe du média filtrant sont soufflés vers le milieu extérieur. Le niveau de colmatage du média filtrant baisse alors et s'éloigne d'un seuil de colmatage impliquant une action de maintenance.

Durant le mode de fonctionnement non filtré, si l'aéronef ne se trouve pas dans ladite phase d'avancement tel que précédemment définie, le moteur peut aspirer de l'air via le média filtrant et/ou la bouche d'entrée d'air dynamique.

Dès lors, durant la phase d'alimentation en air et de nettoyage du média filtrant ce procédé permet de nettoyer en vol le média filtrant, sans action sur le média filtrant, à savoir au dessus du sol en utilisant une bouche d'entée d'air dynamique surdimensionnée durant l'avancement de l'aéronef.

Ce procédé permet donc d'une part de protéger un moteur de polluants dans des phases de vol le nécessitant, du moins tant que le média filtrant n'est pas totalement colmaté, et, d'autre part, de nettoyer le média filtrant en vol si nécessaire et/ou si possible.

Le procédé peut ainsi permettre, suivant l'utilisation de l'aéronef, d'augmenter la durée de vie du média filtrant et de repousser une action de maintenance.

Le procédé peut de plus comporter une ou plusieurs des caractéristiques qui suivent, prises seules ou en combinaison.

Le mode de fonctionnement filtré peut être mis en oeuvre en fonction d'un ou de plusieurs des paramètres suivants.

Ainsi, le procédé comporte une étape de détection d'une pollution de l'air dans ledit milieu extérieur, la mise en oeuvre du mode de fonctionnement non filtré, et de fait du mode de fonctionnement filtré, étant fonction au moins de ladite pollution de l'air dans ledit milieu extérieur.

L'air peut être considéré non pollué lorsque cet air contient dans un certain volume un nombre de particules inférieur à un seuil de particules.

De manière complémentaire ou alternative avec les précédentes possibilités, le procédé peut comporter une étape de détection d'un niveau de colmatage dudit média filtrant, la mise en oeuvre du mode de fonctionnement non filtré, et de fait du mode de fonctionnement filtré, étant fonction au moins dudit niveau de colmatage.

De manière complémentaire ou alternative avec les précédentes possibilités, ledit procédé comporte une étape de détection que ledit aéronef évolue selon ladite au moins une phase d'avancement, la mise en oeuvre du mode de fonctionnement non filtré, et de fait du mode de fonctionnement filtré, étant fonction au moins de ladite détection que ledit aéronef évolue selon ladite au moins une phase d'avancement.

Ladite au moins une phase d'avancement peut comporter une phase de mouvement dudit aéronef selon un sens prédéterminé par rapport à un référentiel dudit aéronef et à une vitesse supérieure à un seuil de vitesse. Par exemple, un tel seuil de vitesse est de l'ordre 100 noeuds soit 185,2 kilomètres par heure.

Selon un exemple compatible avec les précédents, ledit procédé peut comporter une étape de détection d'une nature d'un terrain survolé, la mise en oeuvre du mode de fonctionnement non filtré étant fonction au moins de ladite nature. Par exemple, ladite nature est à choisir dans une liste comprenant au moins un des éléments suivants : une zone désertique, une zone peuplée, une ville, une forêt, une étendu d'eau... La nature du terrain survolé peut être évaluée en combinant la position géographique courante de l'aéronef, par exemple sa latitude et sa longitude, à une carte mémorisée contenant ledit terrain et sa nature.

De manière complémentaire ou alternative, le procédé peut comporter une étape de génération d'un signal de commande avec une commande, activée par un pilote, la mise en oeuvre du mode de fonctionnement non filtré étant fonction au moins dudit signal de commande.

Le système d'alimentation en air peut comprendre une ou plusieurs commandes manuelles, vocales ou visuelles, pour commander l'obturateur et donc pour choisir directement ou indirectement le mode de fonctionnement du système d'alimentation en air.

Par exemple, une commande peut être utilisée pour commander un actionneur déplaçant l'obturateur entre sa position fermée et sa position ouverte.

Selon un autre exemple, une commande peut permettre à un pilote de choisir un mode d'opération parmi une liste de modes d'opération, chaque mode d'opération pilotant l'obturateur en fonction d'au moins un des paramètres précédents.

Les diverses conditions précédentes peuvent être cumulatives et éventuellement hiérarchisées. Les conditions utilisées et/ou la hiérarchie peuvent varier en fonction éventuellement d'un mode d'opération choisi.

Par exemple, le mode de fonctionnement filtré peut être automatiquement mis en oeuvre en plaçant l'obturateur dans sa position fermée si une pollution est détectée, voire aussi si le média filtrant présente un niveau de colmatage inférieur à un seuil de colmatage.

Selon un exemple, le choix du mode de fonctionnement filtré ou non filtré peut uniquement être réalisé par un pilote à l'aide d'une commande prévue à cet effet. Le pilote peut alors choisir la position de l'obturateur en fonction des conditions de vol et/ou de la mission à réaliser, et/ou de l'environnement et/ou de son choix d'optimiser ou non la durée de vie du média filtrant.

Selon un exemple, le mode de fonctionnement non filtré est automatiquement mis en oeuvre en positionnant l'obturateur dans sa position ouverte seulement si ledit aéronef évolue selon ladite au moins une phase d'avancement et/ou si le niveau de colmatage du média filtrant est supérieur ou égal à un seuil de colmatage.

Il est aussi possible de prévoir divers modes d'opération pouvant être choisis par un pilote avec une commande appropriée.

Par exemple, selon un mode d'opération économique, l'obturateur est par défaut placé dans sa position fermée et placé dans sa position ouverte seulement tant qu'aucune pollution n'est détectée et que la vitesse d'avancement est supérieure au seuil de vitesse.

Selon un mode d'opération de protection optimale, l'obturateur est par défaut placé dans sa position ouverte puis placé dans sa position fermée jusqu'à la fin du vol si une pollution est détectée et si en même temps le terrain survolé est une zone désertique.

Selon un mode d'opération privilégiant la performance, l'obturateur est par défaut placé dans sa position fermée puis placé dans sa position ouverte tant qu'aucune pollution n'est détectée et que le terrain survolé est une ville.

Dans tous les cas, le mode de fonctionnement non filtré peut être automatiquement mis en oeuvre en positionnant l'obturateur dans sa position ouverte si le niveau de colmatage du média filtrant est supérieur ou égal à un seuil de colmatage.

Ces divers modes d'opération sont donnés à titre d'exemples pour indiquer que les diverses variantes précitées sont compatibles entre elles.

Outre un procédé, l'invention vise un système selon la revendication 7 apte à appliquer ce procédé, voire configuré pour appliquer ce procédé.

Ce système d'alimentation en air est configuré pour alimenter en air un moteur d'un aéronef selon un débit d'alimentation en air, ledit système d'alimentation en air comprenant une bouche d'entrée d'air dynamique qui est obturable par un obturateur mobile, ledit obturateur étant mobile entre une position fermée dans laquelle l'obturateur obture ladite bouche d'entrée d'air dynamique et une position ouverte dans laquelle l'obturateur n'obture pas ladite bouche d'entrée d'air dynamique, ledit système d'alimentation en air comprenant une bouche d'entrée d'air statique munie d'un dispositif de filtration.

De plus, le dispositif de filtration comporte un média filtrant qui débouche sur une veine d'acheminement d'air dudit système d'alimentation en air. Cette veine d'acheminement d'air débouche directement ou via un ou plusieurs conduits sur le moteur à alimenter en air. Ladite bouche d'entrée d'air dynamique est fluidiquement reliée à la veine d'acheminement d'air en amont du média filtrant selon un sens allant de la bouche d'entrée d'air dynamique vers le moteur à alimenter. Ladite bouche d'entrée d'air dynamique est surdimensionnée pour ingérer dynamiquement un flux d'air durant une phase d'avancement dudit aéronef dans un mode de fonctionnement non filtré, selon un débit d'entrée d'air supérieur à un débit minimum nécessaire pour obtenir ledit débit d'alimentation en air, pour qu'une première partie dudit flux d'air soit acheminé vers ledit moteur et qu'une deuxième partie dudit flux d'air sorte de ladite veine d'acheminement d'air par ledit média filtrant à des fins de nettoyage.

Par suite, le média filtrant et la bouche d'entrée d'air dynamique aboutissent tous deux sur la veine d'acheminement d'air, cette veine d'acheminement d'air ayant une sortie configurée pour alimenter en air le moteur.

L'expression « Ladite bouche d'entrée d'air dynamique est fluidiquement reliée à la veine d'acheminement d'air en amont du média filtrant selon un sens allant de la bouche d'entrée d'air dynamique vers le moteur à alimenter » signifie que le média filtrant abouti dans la veine d'acheminement d'air entre ladite sortie de la veine d'acheminement d'air et la bouche d'entrée d'air dynamique. Par exemple, le média filtrant comporte une face interne qui délimite localement la veine d'acheminement d'air entre ladite sortie de la veine d'acheminement d'air et la bouche d'entrée d'air dynamique.

Par exemple, le média filtrant est immobile dans un référentiel du système d'alimentation en air, notamment par rapport aux autres organes du système et par exemple à la veine d'acheminement d'air, contrairement à un dispositif rotatif.

Le système peut comprendre une ou plusieurs des caractéristiques qui suivent, prises seules ou en combinaison.

Ainsi, le système d'alimentation en air peut comporter un dispositif d'actionnement muni d'un actionneur coopérant avec ledit obturateur, ledit actionneur étant configuré pour déplacer ledit obturateur entre la position ouverte et la position fermée.

Le dispositif d'actionnement peut comprendre un contrôleur indépendant ou non de l'actionneur, et dédié ou non à cette application, pour commander l'actionneur en appliquant le procédé de l'invention en fonction d'un ou de plusieurs signaux reçus, analogiques ou numériques.

Par exemple, le système d'alimentation en air peut comporter au moins une commande pouvant être activée par un pilote, ladite au moins une commande étant reliée par une liaison filaire ou non filaire au dispositif d'actionnement.

Par exemple, le système d'alimentation en air peut comporter que le au moins un senseur de pollution est relié par une liaison filaire ou non filaire au dispositif d'actionnement, ledit senseur de pollution étant configuré pour émettre un signal de pollution porteur d'une information indiquant si l'air présent dans le milieu extérieur est pollué.

Par exemple, un tel senseur de pollution peut comprendre un senseur de particules usuel, un capteur de givre... Le senseur de particules peut être agencé à l'extérieur de la veine d'acheminement d'air, à proximité ou non de la bouche d'entrée d'air dynamique ou du média filtrant.

Par exemple, le système d'alimentation en air peut comporter un senseur d'avancement configuré pour émettre un signal d'avancement transmis par une liaison filaire ou non filaire au dispositif d'actionnement, le signal d'avancement étant porteur d'une information indiquant que ledit aéronef évolue selon ladite au moins une phase d'avancement.

Un tel senseur d'avancement peut comporter un capteur de vitesse usuel, par exemple un capteur d'un système de positionnement par satellites, une sonde à tube de Pitot...

Par exemple, le système d'alimentation en air comporte un senseur de colmatage configuré pour émettre un signal de colmatage transmis par une liaison filaire ou non filaire au dispositif d'actionnement, le signal de colmatage étant porteur d'une information indiquant que ledit média filtrant présente un niveau de colmatage supérieur ou égal à un seuil de colmatage.

Un tel senseur peut être d'un type connu. Par exemple, un tel senseur comporte un capteur de pression mesurant une pression en amont du média filtrant et un capteur de pression mesurant une pression de l'air en aval du média filtrant, un calculateur du senseur ou le contrôleur compilant les mesures pour déterminer le niveau de colmatage du média filtrant.

Selon un exemple compatible avec les précédents, ledit système d'alimentation en air peut comporter un senseur de positionnement configuré pour émettre un signal de positionnement transmis par une liaison filaire ou non filaire au dispositif d'actionnement, le signal de positionnement étant porteur d'une information indiquant la position géographique de l'aéronef.

Par ailleurs, l'invention vise aussi un aéronef muni d'au moins un moteur, cet aéronef comportant un système d'alimentation en air selon l'invention pour acheminer un air présent dans un milieu extérieur situé à l'extérieur dudit aéronef vers ledit moteur.

L'invention et ses avantages apparaîtront avec plus de détails dans le cadre de la description qui suit avec des exemples donnés à titre illustratif en référence aux figures annexées qui représentent :
la figure 1, un schéma présentant un système d'alimentation en air ayant un obturateur à ogive,
la figure 2, un schéma présentant un système d'alimentation en air ayant un obturateur à volet,
la figure 3, un schéma illustrant le procédé de l'invention,
la figure 4, un schéma présentant un système d'alimentation en air dans le mode de fonctionnement filtré,
la figure 5, un schéma présentant un système d'alimentation en air dans le mode de fonctionnement non filtré et durant une phase d'avancement, et
la figure 6, un schéma présentant un système d'alimentation en air dans le mode de fonctionnement non filtré et en dehors d'une phase d'avancement.

Les éléments présents dans plusieurs figures distinctes sont affectés d'une seule et même référence.

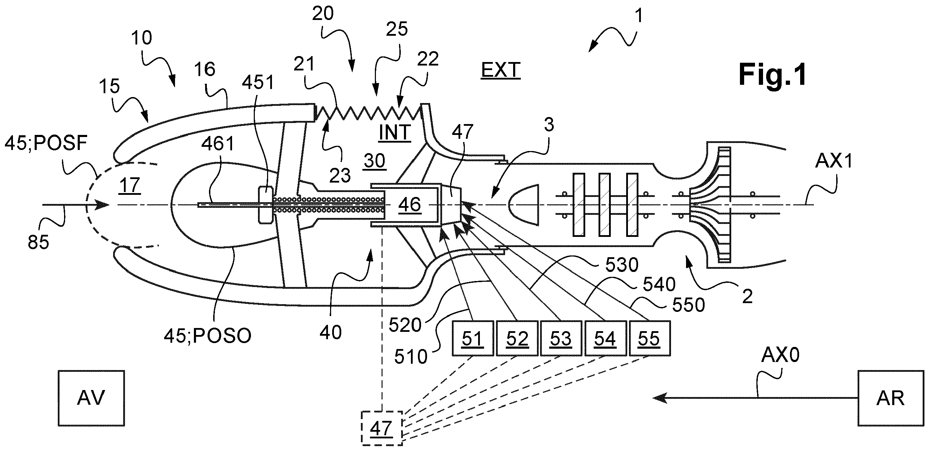

La figure 1 présente un schéma illustrant un aéronef 1 selon l'invention. Cet aéronef 1 comprend une installation motrice comprenant au moins un moteur 2. Dès lors, l'aéronef 1 est muni d'un système d'alimentation en air 10 pour acheminer un air présent dans un milieu extérieur EXT situé à l'extérieur de l'aéronef 1 vers au moins un moteur 2.

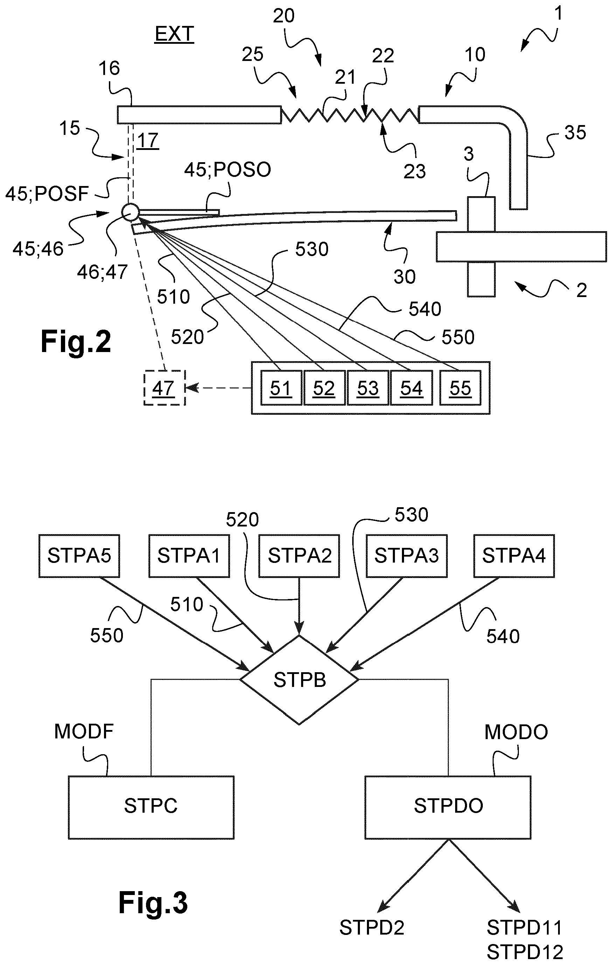

Le système d'alimentation en air 10 est configuré pour alimenter une entrée d'air 3 du moteur 2 selon un débit d'alimentation en air. Une telle entrée d'air 3 peut être une entrée d'air axiale selon l'exemple illustré sur la figure 1 mais peut alternativement prendre la forme d'une entrée d'air radiale, comme illustrée par exemple sur la figure 2.

A cet effet, le système d'alimentation en air 10 comporte, dans un milieu interne INT, une veine d'acheminement d'air 30. La veine d'acheminement d'air 30 présente une sortie, à savoir un tronçon de sortie, qui débouche sur l'entrée d'air 3 du moteur 2. La veine d'acheminement d'air 30 est délimitée par une enveloppe externe, par exemple sensiblement étanche à l'air. Cette enveloppe externe peut comporter au moins une paroi, au moins un capot...

Pour capter de l'air à partir d'un milieu extérieur EXT et l'acheminer dans le moteur 2 via la veine d'acheminement d'air 30, le système d'alimentation en air 10 comprend une bouche d'entrée d'air statique 25. Cette bouche d'entrée d'air statique 25 comprend un passage ménagé dans l'enveloppe externe et mettant en communication fluidique le milieu extérieur EXT et la veine d'acheminement d'air 30. En outre, la bouche d'entrée d'air statique 25 est munie d'un dispositif de filtration 20. Ce dispositif de filtration 20 comporte un média filtrant 21, qui couvre par exemple l'intégralité dudit passage. Le média filtrant 21 débouche sur la veine d'acheminement d'air 30, en amont du moteur 2. On rappelle qu'un média filtrant 21 comporte une barrière poreuse, comportant par exemple une ou plusieurs couches de tissus, de mousse, de mat ou autres. Le média filtrant 21 comporte une face externe 22 au regard du milieu externe EXT et une face interne 23 délimitant localement la veine d'acheminement d'air 30, des orifices mettant en communication fluidique la face externe 22 et la face interne 23.

Par ailleurs, le système d'alimentation en air 10 comprend une bouche d'entrée d'air dynamique 15 qui débouche aussi sur la veine d'acheminement d'air. Cette bouche d'entrée d'air est qualifiée de dynamique dans la mesure où l'air peut être capté sous l'effet de l'avancement de l'aéronef 1. La bouche d'entrée d'air dynamique 15 peut comporter un carter 16 de l'enveloppe externe délimitant un canal d'entrée d'air dynamique 17. Par exemple, le carter 16 a la forme d'un divergent annulaire. La bouche d'entrée d'air dynamique 15 et en particulier son canal d'entrée d'air dynamique 17 peuvent être dirigés selon un axe dynamique AX1 sensiblement parallèle à un axe AX0 de l'aéronef 1 allant de sa queue AR vers son nez AV. Une grille peut aussi protéger le canal d'entrée d'air dynamique 17.

Par ailleurs, la bouche d'entrée d'air dynamique 15 débouche fluidiquement sur la veine d'acheminement d'air 30, en amont du média filtrant 21 selon un sens 85 allant de la bouche d'entrée d'air dynamique 15 vers le moteur 2. Ainsi, l'air pénétrant dans la bouche d'entrée d'air dynamique 15 traverse le canal d'entrée d'air dynamique 17 et rejoint la veine d'acheminement d'air 30 pour atteindre le moteur 2 et le média filtrant 21.

La bouche d'entrée d'air dynamique 15, et en particulier son canal d'entrée d'air dynamique 17, peuvent être obturés par un obturateur 45 mobile. Cet obturateur 45 est mobile, en translation et/ou en rotation, entre une position fermée POSF illustrée avec des pointillés sur la figure 1 et une position ouverte POSO illustrée avec un trait plein sur la figure 1. Dans la position fermée, l'obturateur 45 obture la bouche d'entrée d'air dynamique 15, à savoir l'obturateur 45 empêche la circulation d'air au travers du canal d'entrée d'air dynamique 17. A l'inverse, dans la position ouverte POSO, l'obturateur 45 n'obture pas ladite bouche d'entrée d'air dynamique 15, à savoir l'obturateur 45 n'empêche pas la circulation d'air au travers du canal d'entrée d'air dynamique 17.

Cet obturateur 45 comporte selon l'exemple de la figure 1 une ogive mobile en translation selon l'axe dynamique AX1.

Cependant, tout autre moyen équivalent peut être utilisé. A titre illustratif, la figure 2 illustre un volet mobile en rotation.

Dès lors, le système d'alimentation en air 10 comporte un dispositif d'actionnement 40 pour mettre en mouvement sur requête l'obturateur 45. Ainsi, le dispositif d'actionnement 40 est muni d'un actionneur 46 coopérant avec l'obturateur 45 pour le déplacer entre la position ouverte POSO et la position fermée POSF. Un tel actionneur 46 peut prendre la forme d'un actionneur électrique, pneumatique, hydraulique... Selon l'exemple de la figure 1, l'actionneur 46 peut comprendre une vis-sans-fin 461 mobile en rotation le long de son axe d'extension longitudinal, l'obturateur 45 ayant un écrou 451 coopérant en liaison de type hélicoïdale avec la vis-sans-fin 461. Selon l'exemple de la figure 2, l'actionneur 46 peut être un actionneur rotatif comprenant une tige de sortie mobile en rotation conjointement avec l'obturateur 45.

Par ailleurs, le dispositif d'actionnement 40 peut comprendre un contrôleur 47 relié par une liaison filaire ou non filaire à l'actionneur 46 pour ordonner le déplacement de l'obturateur 45 en fonction d'un ou plusieurs signaux, analogiques ou numériques.

L'obturateur 45 et éventuellement son actionneur 46 peuvent être agencés dans le milieu interne INT du système d'alimentation en air, selon les illustrations en traits pleins. Par exemple, un actionneur 46 porte l'obturateur 45 associé. Des ailettes ou autres fixent cet ensemble à l'enveloppe extérieure.

Alternativement, selon l'illustration en traits pointillés, un contrôleur 47 peut être déporté en dehors du milieu interne INT.

Indépendamment de la réalisation, un contrôleur 47 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le contrôleur 47 peut ainsi comprendre un ou plusieurs calculateurs. Le terme « contrôleur » désigne une unité pouvant piloter chaque actionneur 46 en fonction de données d'entrées et d'une logique interne. Le terme processeur peut désigner aussi bien une unité centrale de traitement connue sous l'acronyme CPU, une unité graphique de traitement GPU, une unité digitale connue sous l'acronyme DSP, un microcontrôleur...

Pour déterminer la position dans laquelle doit se trouver l'obturateur 45, le système d'alimentation en air 10 peut comprendre un ou plusieurs des senseurs qui suivent. Le terme « senseur » est à interpréter au sens large, un senseur pouvant comprendre au moins un capteur émettant un signal de mesure analogique ou numérique voire éventuellement une unité de calcul apte à émettre à son tour un signal en fonction du signal de mesure reçu et d'une logique interne.

Ainsi, le système d'alimentation en air 10 peut comporter au moins une commande 51 reliée par une liaison filaire ou non filaire au dispositif d'actionnement 40. La ou les commandes peuvent être activées par un pilote, manuellement ou par une instruction vocale ou encore par un mouvement, pour transmettre un signal de commande 510 au contrôleur 47. Une commande 51 peut prendre la forme d'un commutateur à au moins deux positions, d'une face tactile permettant de choisir une possibilité parmi plusieurs possibilités et par exemple parmi plusieurs modes d'opération....

Le système d'alimentation en air 10 peut comporter au moins un senseur de pollution 52 relié par une liaison filaire ou non filaire au dispositif d'actionnement 40. Le ou les senseurs de pollution 52 sont configurés pour émettre un signal de pollution 520, transmis au contrôleur 47, porteur d'une information indiquant si l'air présent dans le milieu extérieur EXT est pollué. Par exemple, un senseur de pollution 52 peut comprendre un capteur de givre usuel et/ou un senseur de pollution 52 peut capter des particules de sables ou de poussières pour évaluer le nombre de particules dans l'air... Le contrôleur 47 peut recevoir ce nombre de particules et le comparer à un seuil de particules pour déterminer que l'air n'est pas pollué lorsque le nombre mesuré de particules est inférieur au seuil de particules. Selon une autre méthode, le senseur de pollution 52 comporte une unité effectuant cette comparaison et transmettant un signal de pollution indiquant si l'air est pollué ou non.

Le système d'alimentation en air 10 peut comporter un senseur d'avancement 53 configuré pour émettre un signal d'avancement 530 numérique ou analogique transmis par une liaison filaire ou non filaire au contrôleur 47. Le signal d'avancement 530 étant porteur d'une information indiquant que ledit aéronef 1 évolue ou non selon une phase de vol dite « une phase d'avancement ». Par exemple, un senseur d'avancement 53 peut comprendre un capteur de vitesse pour évaluer la vitesse air de l'aéronef ou un autre type de vitesse. Le contrôleur 47 peut recevoir cette vitesse et la comparer à un seuil de vitesse pour déterminer que l'aéronef 1 effectue une dite phase d'avancement lorsque la vitesse mesurée est supérieure à un seuil de vitesse. Selon une autre méthode, le senseur d'avancement 53 comporte une unité effectuant cette comparaison et transmettant un signal d'avancement 530 indiquant si l'aéronef 1 effectue une dite phase d'avancement ou non.

Le système d'alimentation en air 10 peut comporter un senseur de colmatage 54 émettant un signal de colmatage 540, analogique ou numérique, transmis par une liaison filaire ou non filaire au contrôleur 47, le signal de colmatage 540 étant porteur d'une information indiquant que ledit média filtrant 21 présente ou non un niveau de colmatage supérieur ou égal à un seuil de colmatage. Par exemple, un senseur de colmatage 54 peut comprendre un ou plusieurs capteurs de pression. Le contrôleur 47 peut recevoir un ou des signaux de mesure, peut les décoder pour en déduire un niveau de colmatage comparé à un seuil de colmatage afin de déterminer si le média filtrant 21 doit être nettoyé. Selon une autre méthode, le senseur de colmatage 54 comporte une unité effectuant cette comparaison et transmettant un signal de colmatage 540 indiquant si le média filtrant 21 doit être nettoyé.

Le système d'alimentation en air 10 peut comporter un senseur de positionnement 55 configuré pour émettre un signal de positionnement 550 transmis par une liaison filaire ou non filaire au dispositif d'actionnement 40, le signal de positionnement 550 étant porteur d'une information indiquant la position géographique de l'aéronef 1. De la même manière que précédemment, le contrôleur 47 peut traiter le signal de positionnement 550 pour déterminer ladite position géographique ou peut recevoir cette position géographique. Le contrôleur 47 ou le senseur de positionnement 55 peut appliquer des instructions pour en déduire la nature du terrain survolé à l'aide d'une modélisation de ce terrain.

Par ailleurs, ladite bouche d'entrée d'air dynamique 15 est surdimensionnée pour pouvoir admettre plus d'air que nécessaire pour le fonctionnement du moteur durant une phase d'avancement de l'aéronef 1 lorsque l'obturateur 45 est dans sa position ouverte POSO afin d'appliquer le procédé illustré sur la figure 3.

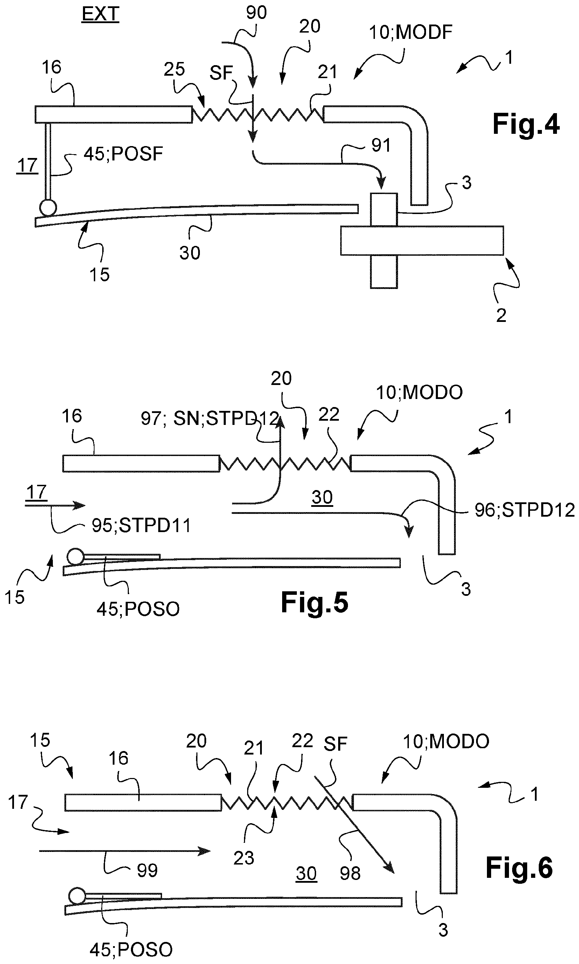

En référence à la figure 3, durant une étape de choix STPB, le dispositif d'actionnement 40 est configuré pour déterminer si l'obturateur 45 doit être placé dans sa position fermée afin de mettre en place un mode de fonctionnement filtré MODF illustré sur la figure 4 ou dans sa position ouverte pour appliquer un mode de fonctionnement non filtré MODO illustré sur les figures 5 et 6.

A cet effet, durant des étapes optionnelles STPA1, STPA2, STPA3, STPA4, STPA5, le ou les divers senseurs énumérés précédemment transmettent les signaux 510, 520, 530, 540, 550 au contrôleur 47.

Ainsi, la mise en oeuvre du mode de fonctionnement non filtré MODO peut être fonction :
- au moins de la pollution de l'air dans le milieu extérieur EXT évaluée lors d'une étape de détection STPA2 d'une pollution de l'air mise en oeuvre avec le senseur de pollution 52, et/ou
- au moins d'un signal de commande 510 émis par une commande lors d'une étape de génération STPA1 d'un signal de commande 510 avec une commande 51, activée par un pilote, et/ou
- au moins d'un niveau de colmatage dudit média filtrant 21 évalué lors d'une étape de détection STPA4 d'un niveau de colmatage mise en oeuvre par un senseur de colmatage 54, et/ou
- au moins de la détection que ledit aéronef 1 évolue selon une phase d'avancement évaluée lors d'une étape de détection STPA3 mis en oeuvre avec le senseur d'avancement 53, et/ou
- au moins de la nature du terrain survolé évaluée lors d'une étape de détection STPA5 d'une nature d'un terrain survolé mise en oeuvre avec le senseur de position 55 pour déterminer la position de l'aéronef 1 et reporter cette position dans une carte présentant la nature du terrain.

Ainsi, en fonction du cas courant, le contrôleur 47 peut transmettre en vol un signal de commande à l'actionneur 46. Durant une étape STPC, l'actionneur 46 place alors l'obturateur dans sa position fermée POSF durant le mode de fonctionnement filtré MODF. En référence à la figure 4, de l'air traverse alors selon la flèche 90 le média filtrant 21 selon un sens de filtration SF allant de la face externe 22 à la face interne 23. Les polluants sont bloqués contre la face externe 22. L'air filtré s'écoule dans la veine d'acheminement d'air 30 selon la flèche 91 pour rejoindre l'entrée d'air 3 du moteur 2.

Selon divers exemples, le mode de fonctionnement filtré MODF est appliqué tant que des polluants sont détectés lors de l'étape STPA2 et éventuellement tant que le média filtrant 21 est considéré comme présentant un niveau de colmatage inférieur au seuil de colmatage suite à l'étape STPA4, voire tant que l'aéronef 1 survole une zone désertique selon une évaluation réalisée lors de l'étape STPA5.

A l'inverse, le contrôleur 47 peut transmettre un signal de commande à l'actionneur 46 afin que, durant une étape STPD0, l'actionneur 46 place l'obturateur 45 dans sa position ouverte POSO pour atteindre le mode de fonctionnement non filtré MODO.

Durant une phase d'avancement de l'aéronef 1 et en référence à la figure 5, la bouche d'entrée d'air dynamique 15 met alors en oeuvre une étape d'admission STPD11 dynamique d'un flux d'air 95 sous l'effet de l'avancement de l'aéronef 1. La bouche d'entrée d'air dynamique 15 fait circuler ce flux d'air 95 dans le milieu interne INT selon un débit d'entrée d'air supérieur à un débit minimum nécessaire pour obtenir ledit débit d'alimentation en air requis au niveau de l'entrée d'air 3 du moteur 2.

En raison de ce gavage d'air, la veine d'acheminement d'air 30 met en oeuvre une étape de transfert STPD12 d'une première partie 96 du flux d'air 95 vers ledit moteur 2 par aspiration, l'air étant aspiré par le moteur 2, et de transfert d'une deuxième partie 97 dudit flux d'air 95 vers le média filtrant 21. Par conséquent, cette deuxième partie 97 dudit flux d'air 95 traverse le média filtrant 21 selon un sens SN contraire au sens de filtration usuel pour rejoindre le milieu extérieur EXT. La deuxième partie 97 du flux d'air 95 peut tendre à décoller des polluants de la face externe 22 du média filtrant 21 et les expulser vers le milieu externe EXT pour nettoyer cette face externe 22.

En dehors de cette phase d'avancement et en référence à la figure 6, l'air peut pénétrer dans la veine d'acheminement d'air 30 par exemple via la bouche d'entrée d'air dynamique 15 et le canal d'entrée d'air dynamique 17 selon la flèche 99 et via la média filtrant 21 selon la flèche 98.

Par exemple, une entrée d'air du moteur de la figure 1 pourrait être une entrée d'air axiale et l'entrée d'air du moteur de la figure 2 pourrait à l'inverse être une entrée d'air axiale.

## Revendications

1. Procédé pour alimenter en air un moteur (2) d'un aéronef (1) selon un débit d'alimentation en air via un système d'alimentation en air (10) de l'aéronef (1), ledit système d'alimentation en air (10) comprenant une bouche d'entrée d'air dynamique (15) qui est obturable par un obturateur (45) mobile, ledit obturateur (45) étant mobile entre une position fermée (POSF) dans laquelle l'obturateur (45) obture ladite bouche d'entrée d'air dynamique (15) et une position ouverte (POSO) dans laquelle l'obturateur (45) n'obture pas ladite bouche d'entrée d'air dynamique (15), ledit système d'alimentation en air (10) comprenant une bouche d'entrée d'air statique (25) munie d'un dispositif de filtration (20), ledit obturateur (45) étant dans la position fermée durant un mode de fonctionnement filtré (MODF) pendant lequel un air d'un milieu extérieur situé à l'extérieur de l'aéronef (1) est filtré par le dispositif de filtration (20),
**caractérisé en ce que** le dispositif de filtration ayant un média filtrant (21), ledit procédé comporte en vol un mode de fonctionnement non filtré (MODO), ledit procédé comportant une étape de détection (STPA2) d'une pollution de l'air dans ledit milieu extérieur (EXT), la mise en oeuvre du mode de fonctionnement non filtré (MODO) étant fonction au moins de ladite pollution de l'air dans ledit milieu extérieur (EXT), le mode de fonctionnement non filtré (MODO) comprenant les étapes suivantes :
- positionnement (STPD0) dudit obturateur (45) dans la position ouverte (POSO), et
- durant une phase d'avancement de l'aéronef, admission (STPD11) dynamique d'un flux d'air (95) sous l'effet dudit avancement de l'aéronef (1) par la bouche d'entrée d'air dynamique (15) selon un débit d'entrée d'air supérieur à un débit minimum nécessaire pour obtenir ledit débit d'alimentation en air, puis transfert (STPD12) d'une première partie (96) dudit flux d'air (95) vers ledit moteur (2) et d'une deuxième partie (97) dudit flux d'air (95) vers le média filtrant (21), ladite deuxième partie (97) dudit flux d'air (95) traversant le média filtrant (21) pour rejoindre le milieu extérieur (EXT) à des fins de nettoyage du média filtrant (21).

2. Procédé selon la revendication 1,
**caractérisé en ce que** le procédé comporte une étape de génération (STPA1) d'un signal de commande (510) avec une commande (51), activée par un pilote, la mise en oeuvre du mode de fonctionnement non filtré (MODO) étant fonction au moins dudit signal de commande (510).

3. Procédé selon l'une quelconque des revendications 1 à 2, **caractérisé en ce que** ledit procédé comporte une étape de détection (STPA4) d'un niveau de colmatage dudit média filtrant (21), la mise en oeuvre du mode de fonctionnement non filtré (MODO) étant fonction au moins dudit niveau de colmatage.

4. Procédé selon l'une quelconque des revendications 1 à 3, **caractérisé en ce que** ledit procédé comporte une étape de détection (STPA3) que ledit aéronef (1) évolue selon ladite au moins une phase d'avancement, la mise en oeuvre du mode de fonctionnement non filtré (MODO) étant fonction au moins de ladite détection que ledit aéronef (1) évolue selon ladite au moins une phase d'avancement.

5. Procédé selon l'une quelconque des revendications 1 à 4, **caractérisé en ce que** ladite au moins une phase d'avancement comporte une phase de mouvement dudit aéronef (1) selon un sens prédéterminé par rapport à un référentiel dudit aéronef (1) et à une vitesse supérieure à un seuil de vitesse.

6. Procédé selon l'une quelconque des revendications 1 à 5, **caractérisé en ce que** ledit procédé comporte une étape de détection (STPA5) d'une nature d'un terrain survolé, la mise en oeuvre du mode de fonctionnement non filtré (MODO) étant fonction au moins de ladite nature.

7. Système d'alimentation en air (10) configuré pour alimenter en air un moteur (2) d'un aéronef (1) selon un débit d'alimentation en air et apte à mettre en oeuvre le procédé selon l'une quelconque des revendications 1 à 6, ledit système d'alimentation en air comprenant une bouche d'entrée d'air dynamique (15) qui est obturable par un obturateur (45) mobile, ledit obturateur (45) étant mobile entre une position fermée dans laquelle l'obturateur (45) obture ladite bouche d'entrée d'air dynamique (15) et une position ouverte (POSO) dans laquelle l'obturateur (45) n'obture pas ladite bouche d'entrée d'air dynamique (15), ledit système d'alimentation en air (10) comprenant une bouche d'entrée d'air statique (25) munie d'un dispositif de filtration (20),
**caractérisé en ce que** ledit dispositif de filtration (20) comporte un média filtrant (21) qui débouche sur une veine d'acheminement d'air (30) dudit système d'alimentation en air (10) ; ledit système d'alimentation en air comporte au moins un senseur de pollution (52) de l'air dans le milieu extérieur; ladite bouche
d'entrée d'air dynamique (15) étant fluidiquement relié à la veine d'acheminement d'air (30) en amont du média filtrant (21) selon un sens (85) allant de la bouche d'entrée d'air dynamique (15) vers le moteur (2) à alimenter ; ladite bouche d'entrée d'air dynamique (15) étant surdimensionnée pour ingérer dynamiquement un flux d'air (95), durant une phase d'avancement dudit aéronef (1) dans un mode de fonctionnement non filtré, selon un débit d'entrée d'air supérieur à un débit minimum nécessaire pour obtenir ledit débit d'alimentation en air pour qu'une première partie (96) dudit flux d'air (95) soit acheminé vers ledit moteur (2) et qu'une deuxième partie (97) dudit flux d'air (95) sorte de ladite veine d'acheminement d'air (30) par ledit média filtrant (21) à des fins de nettoyage.

8. Système selon la revendication 7,
**caractérisé en ce que** ledit système d'alimentation en air (10) comporte un dispositif d'actionnement (40) muni d'un actionneur (46) coopérant avec ledit obturateur (45), ledit actionneur (46) étant configuré pour déplacer ledit obturateur (45) entre la position ouverte (POSO) et la position fermée (POSF).

9. Système selon la revendication 8,
**caractérisé en ce que** ledit système d'alimentation en air (10) comporte au moins une commande (51) pouvant être activée par un pilote, ladite au moins une commande (51) étant reliée par une liaison filaire ou non filaire au dispositif d'actionnement (40).

10. Système selon l'une quelconque des revendications 7 à 9, **caractérisé en ce que** ledit senseur de pollution (52) est relié par une liaison filaire ou non filaire au dispositif d'actionnement (40), ledit senseur de pollution (52) étant configuré pour émettre un signal de pollution (520) porteur d'une information indiquant si l'air présent dans le milieu extérieur (EXT) est pollué.

11. Système selon l'une quelconque des revendications 7 à 10, **caractérisé en ce que** ledit système d'alimentation en air (10) comporte un senseur d'avancement (53) configuré pour émettre un signal d'avancement (530) transmis par une liaison filaire ou non filaire au dispositif d'actionnement (40), le signal d'avancement (530) étant porteur d'une information indiquant que ledit aéronef (1) évolue selon ladite au moins une phase d'avancement.

12. Système selon l'une quelconque des revendications 7 à 11, **caractérisé en ce que** ledit système d'alimentation en air (10) comporte un senseur de colmatage (54) configuré pour émettre un signal de colmatage (540) transmis par une liaison filaire ou non filaire au dispositif d'actionnement (40), le signal de colmatage (540) étant porteur d'une information indiquant que ledit média filtrant (21) présente un niveau de colmatage supérieur ou égal à un seuil de colmatage.

13. Système selon l'une quelconque des revendications 7 à 11, **caractérisé en ce que** ledit système d'alimentation en air (10) comporte un senseur de positionnement (55) configuré pour émettre un signal de positionnement (550) transmis par une liaison filaire ou non filaire au dispositif d'actionnement (40), le signal de positionnement (550) étant porteur d'une information indiquant la position géographique de l'aéronef.

14. Aéronef (1) muni d'au moins un moteur (2),
**caractérisé en ce que** ledit aéronef (1) comporte un système d'alimentation en air (10) selon l'une quelconque des revendications 7 à 13 pour acheminer un air présent dans un milieu extérieur situé à l'extérieur dudit aéronef (1) vers ledit moteur (2).

## Patentansprüche

1. Verfahren zur Luftversorgung eines Triebwerks (2) eines Luftfahrzeugs (1) mit einem Luftversorgungsdurchsatz über ein Luftversorgungssystem (10) des Luftfahrzeugs (1), wobei das Luftversorgungssystem (10) eine dynamische Lufteinlassöffnung (15) umfasst, die durch einen beweglichen Verschluss (45) verschließbar ist, wobei der Verschluss (45) zwischen einer geschlossenen Position (POSF), in der der Verschluss (45) die dynamische Lufteinlassöffnung (15) verschließt, und einer offenen Position (POSO), in der der Verschluss (45) die dynamische Lufteinlassöffnung (15) nicht verschließt, bewegbar ist, wobei das Luftversorgungssystem (10) eine statische Lufteinlassöffnung (25) umfasst, die mit einer Filtervorrichtung (20) versehen ist, wobei sich der Verschluss (45) während eines Filterbetriebsmodus (MODF), in dem Luft aus einem außerhalb des Luftfahrzeugs (1) befindlichen Außenmedium durch die Filtervorrichtung (20) gefiltert wird, in der geschlossenen Position befindet,
**dadurch gekennzeichnet, dass** die Filtervorrichtung ein Filtermedium (21) aufweist, das Verfahren im Flug einen Nicht-Filterbetriebsmodus (MODO) umfasst, dass das Verfahren einen Schritt des Erfassens (STPA2) einer Luftverschmutzung in dem Außenmedium (EXT) umfasst, wobei die Anwendung des Nicht-Filterbetriebsmodus (MODO) zumindest von der Luftverschmutzung in dem Außenmedium (EXT) abhängig ist, wobei der Nicht-Filterbetriebsmodus (MODO) die folgenden Schritte umfasst:
- Positionieren (STPD0) des Verschlusses (45) in der offenen Position (POSO), und
- während einer Vorwärtsbewegungsphase des Luftfahrzeugs, dynamisches Einlassen (STPD 11) eines Luftstroms (95) unter der Wirkung der besagten Vorwärtsbewegung des Luftfahrzeugs (1) durch die dynamische Lufteinlassöffnung (15) mit einem Lufteinlassdurchsatz, der größer ist als ein Mindestdurchsatz, der zum Erreichen des besagten Luftversorgungsdurchsatzes erforderlich ist, dann Leiten (STPD 12) eines ersten Teils (96) des Luftstroms (95) zu dem Triebwerk (2) und eines zweiten Teils (97) des Luftstroms (95) zu dem Filtermedium (21), wobei der zweite Teil (97) des Luftstroms (95) zu Zwecken der Reinigung des Filtermediums (21) durch das Filtermedium (21) in die Außenumgebung (EXT) gelangt.

2. Verfahren nach Anspruch 1,
**dadurch gekennzeichnet, dass** das Verfahren einen Schritt des Erzeugens (STPA1) eines Steuersignals (510) mit einer durch einen Piloten aktivierten Steuerung (51) umfasst, wobei die Anwendung des Nicht-Filterbetriebsmodus (MODO) zumindest von dem Steuersignal (510) abhängig ist.

3. Verfahren nach einem der Ansprüche 1 bis 2,
**dadurch gekennzeichnet, dass** das Verfahren einen Schritt des Erfassens (STPA4) eines Verstopfungsgrads des Filtermediums (21) umfasst, wobei die Anwendung des Nicht-Filterbetriebsmodus (MODO) zumindest von dem Verstopfungsgrad abhängig ist.

4. Verfahren nach einem der Ansprüche 1 bis 3,
**dadurch gekennzeichnet, dass** das Verfahren einen Schritt des Erfassens (STPA3) umfasst, dass sich das Luftfahrzeug (1) in der mindestens einen Vorwärtsbewegungsphase bewegt, wobei die Anwendung des Nicht-Filterbetriebsmodus (MODO) mindestens von dem Erfassen abhängig ist, dass sich das Luftfahrzeug (1) in der mindestens einen Vorwärtsbewegungsphase bewegt.

5. Verfahren nach einem der Ansprüche 1 bis 4,
**dadurch gekennzeichnet, dass** die mindestens eine Vorwärtsbewegungsphase eine Phase des Bewegens des Luftfahrzeugs (1) in einer vorgegebenen Richtung in Bezug auf ein Bezugssystem des Luftfahrzeugs (1) und mit einer Geschwindigkeit oberhalb eines Geschwindigkeitsschwellenwerts umfasst.

6. Verfahren nach einem der Ansprüche 1 bis 5,
**dadurch gekennzeichnet, dass** das Verfahren einen Schritt des Erfassens (STPA5) einer Beschaffenheit eines überflogenen Geländes umfasst, wobei die Anwendung des Nicht-Filterbetriebsmodus (MODO) zumindest von dieser Beschaffenheit abhängig ist.

7. Luftversorgungssystem (10), das für die Luftversorgung eines Triebwerks (2) eines Luftfahrzeugs (1) mit einem Luftversorgungsdurchsatz konfiguriert und eingerichtet ist, um das Verfahren nach einem der Ansprüche 1 bis 6 auszuführen, wobei das Luftversorgungssystem eine dynamische Lufteinlassöffnung (15) umfasst, die durch einen beweglichen Verschluss (45) verschließbar ist, wobei der Verschluss (45) zwischen einer geschlossenen Position, in der der Verschluss (45) die dynamische Lufteinlassöffnung (15) verschließt, und einer offenen Position (POSO), in der der Verschluss (45) die dynamische Lufteinlassöffnung (15) nicht verschließt, bewegbar ist, wobei das Luftversorgungssystem (10) eine statische Lufteinlassöffnung (25) umfasst, die mit einer Filtervorrichtung (20) versehen ist,
**dadurch gekennzeichnet, dass** die Filtervorrichtung (20) ein Filtermedium (21) umfasst, das in einen Luftleitkanal (30) des Luftversorgungssystems (10) mündet; dass das Luftversorgungssystem mindestens einen Sensor (52) für die Verschmutzung der Luft in der Außenumgebung umfasst; dass die dynamische Lufteinlassöffnung (15) mit dem Luftleitkanal (30) stromaufwärts des Filtermediums (21), bezogen auf eine Richtung (85) von der dynamischen Lufteinlassöffnung (15) zu dem zu versorgenden Triebwerk (2), fluidisch verbunden ist; wobei die dynamische Lufteinlassöffnung (15) überdimensioniert ist, um während einer Vorwärtsbewegungsphase des Luftfahrzeugs (1) in einem Nicht-Filterbetriebsmodus dynamisch einen Luftstrom (95) mit einem Lufteinlassdurchsatz aufzunehmen, der größer ist als ein Mindestdurchsatz, der erforderlich ist, um den besagten Luftversorgungsdurchsatz zu erreichen, so dass ein erster Teil (96) des Luftstroms (95) zu dem Triebwerk (2) geleitet wird und ein zweiter Teil (97) des Luftstroms (95) zu Reinigungszwecken aus dem Luftleitkanal (30) durch das Filtermedium (21) austritt.

8. System nach Anspruch 7,
**dadurch gekennzeichnet, dass** das Luftversorgungssystem (10) eine Betätigungsvorrichtung (40) mit einem Stellglied (46) aufweist, das mit dem Verschluss (45) zusammenwirkt, wobei das Stellglied (46) konfiguriert ist, um den Verschluss (45) zwischen der offenen Position (POSO) und der geschlossenen Position (POSF) zu bewegen.

9. System nach Anspruch 8,
**dadurch gekennzeichnet, dass** das Luftversorgungssystem (10) mindestens eine Steuerung (51) aufweist, die durch einen Piloten aktivierbar ist, wobei die mindestens eine Steuerung (51) über eine drahtgebundene oder nicht drahtgebundene Verbindung mit der Betätigungsvorrichtung (40) verbunden ist.

10. System nach einem der Ansprüche 7 bis 9,
**dadurch gekennzeichnet, dass** der Verschmutzungssensor (52) über eine drahtgebundene oder nicht drahtgebundene Verbindung mit der Betätigungsvorrichtung (40) verbunden ist, wobei der Verschmutzungssensor (52) konfiguriert ist, um ein Verschmutzungssignal (520) auszugeben, das eine Information beinhaltet, die angibt, ob die Luft in der äußeren Umgebung (EXT) verschmutzt ist.

11. System nach einem der Ansprüche 7 bis 10,
**dadurch gekennzeichnet, dass** das Luftversorgungssystem (10) einen Vorwärtsbewegungssensor (53) umfasst, der konfiguriert ist, um ein Vorwärtsbewegungssignal (530) auszusenden, das über eine drahtgebundene oder nicht drahtgebundene Verbindung an die Betätigungsvorrichtung (40) übertragen wird, wobei das Vorwärtsbewegungssignal (530) eine Information beinhaltet, die angibt, dass sich das Luftfahrzeug (1) in der mindestens einen Vorwärtsbewegungsphase bewegt.

12. System nach einem der Ansprüche 7 bis 11,
**dadurch gekennzeichnet, dass** das Luftversorgungssystem (10) einen Verstopfungssensor (54) umfasst, der konfiguriert ist, um ein Verstopfungssignal (540) auszusenden, das über eine drahtgebundene oder nicht drahtgebundene Verbindung an die Betätigungsvorrichtung (40) übertragen wird, wobei das Verstopfungssignal (540) eine Information beinhaltet, die angibt, dass das Filtermedium (21) einen Verstopfungsgrad aufweist, der größer oder gleich einem Verstopfungsschwellenwert ist.

13. System nach einem der Ansprüche 7 bis 11,
**dadurch gekennzeichnet, dass** das Luftversorgungssystem (10) einen Positionssensor (55) umfasst, der konfiguriert ist, um ein Positionssignal (550) auszusenden, das über eine drahtgebundene oder nicht drahtgebundene Verbindung an die Betätigungsvorrichtung (40) übertragen wird, wobei das Positionssignal (550) eine Information beinhaltet, die die geografische Position des Flugzeugs angibt.

14. Luftfahrzeug (1) mit mindestens einem Triebwerk (2),
**dadurch gekennzeichnet, dass** das Luftfahrzeug (1) ein Luftversorgungssystem (10) nach einem der Ansprüche 7 bis 13 aufweist, um Luft, die in einem außerhalb des Luftfahrzeugs (1) befindlichen Außenmedium vorhanden ist, zu dem Triebwerk (2) zu leiten.

## Claims

1. Method for supplying air to an engine (2) of an aircraft (1) at an air supply flow rate via an air supply system (10) of the aircraft (1), said air supply system (10) comprising a dynamic air intake vent (15) that can be closed by a movable closure member (45), said movable closure member (45) being movable between a closed position (POSF) in which the closure member (45) closes said dynamic air intake vent (15) and an open position (POSO) in which the closure member (45) does not close said dynamic air intake vent (15), said air supply system (10) comprising a static air intake vent (25) equipped with a filtration device (20), said closure member (45) being in the closed position during a filtered operating mode (MODF) during which air from an external environment situated outside the aircraft (1) is filtered by the filtration device (20),
**characterized in that** the filtration device has a filter medium (21), said method comprises, during flight, an unfiltered operating mode (MODO), said method comprising a step of detecting (STPA2) air pollution in said external environment (EXT), the implementation of the unfiltered operating mode (MODO) being a function at least on said air pollution in said external environment (EXT), the unfiltered operating mode (MODO) comprising the following steps:
- positioning (STPD0) of said closure member (45) in the open position (POSO), and
- during a phase of forward travel of the aircraft, dynamic intake (STPD11) of an air flow (95) as a result of said forward travel of the aircraft (1) via the dynamic air intake vent (15) at an air intake flow rate higher than a minimum flow rate necessary in order to obtain the air supply flow rate, then transfer (STPD12) of a first portion (96) of said air flow (95) to said engine (2) and a second portion (97) of said air flow (95) to the filter medium (21), said second portion (97) of said flow of air (95) passing through the filter medium (21) to return to the external environment (EXT) in order to clean the filter medium (21).

2. Method according to Claim 1,
**characterized in that** the method comprises a step of generating (STPA1) a control signal (510) with a control (51), activated by a pilot, the implementation of the unfiltered operating mode (MODO) being a function at least of said control signal (510).

3. Method according to any one of Claims 1 to 2,
**characterized in that** said method comprises a step of detecting (STPA4) a clogging level of said filter medium (21), the implementation of the unfiltered operating mode (MODO) being a function at least of said clogging level.

4. Method according to any one of Claims 1 to 3,
**characterized in that** said method comprises a step of detecting (STPA3) that said aircraft (1) is progressing according to said at least one phase of forward travel, the implementation of the unfiltered operating mode (MODO) being a function at least of said detection that said aircraft (1) is progressing according to said at least one phase of forward travel.

5. Method according to any one of Claims 1 to 4,
**characterized in that** said at least one phase of forward travel includes a phase of movement of said aircraft (1) in a predetermined direction relative to an reference frame of said aircraft (1) and at a speed greater than a speed threshold.

6. Method according to any one of Claims 1 to 5,
**characterized in that** said method comprises a step of detecting (STPA5) the nature of a terrain being flown over, the implementation of the unfiltered operating mode (MODO) being a function at least of said nature.

7. Air supply system (10) configured to supply air to an aircraft (1) engine (2) according to an air supply rate and capable of implementing the method according to any one of Claims 1 to 6, said air supply system comprising a dynamic air intake vent (15) that can be closed by a movable closure member (45), said closure member (45) being movable between a closed position in which the closure member (45) closes said dynamic air intake vent (15) and an open position (POSO) in which the closure member (45) does not close said dynamic air intake vent(15), said air supply system (10) comprising a static air intake vent (25) provided with a filtration device (20), **characterized in that** said filtration device (20) comprises a filter medium (21) which opens into an air delivery duct (30) of said air supply system (10); said air supply system comprises at least one air pollution sensor (52) in the external environment; said dynamic air intake vent (15) being fluidly connected to the air delivery duct (30) upstream of the filter medium (21) in a direction (85) going from the dynamic air intake vent (15) towards the engine (2) to be supplied; said dynamic air intake vent (15) being oversized in order to dynamically ingest an air flow (95) during a phase of forward travel of said aircraft (1) in a non-filtered operating mode, at an air intake rate greater than a minimum rate necessary to obtain said air supply rate, so that a first portion (96) of said air flow (95) is delivered to said engine (2) and a second portion (97) of said air flow (95) exits from said air delivery duct (30) through said filter medium (21) for cleaning purposes.

8. System according to Claim 7,
**characterized in that** said air supply system (10) comprises an actuation device (40) equipped with an actuator (46) cooperating with said closure member (45), said actuator (46) being configured to move said closure member (45) between the open position (POSO) and the closed position (POSF).

9. System according to Claim 8,
**characterized in that** said air supply system (10) comprises at least one control (51) that can be activated by a pilot, said at least one control (51) being connected by a wired or wireless connection to the actuation device (40).

10. System according to any one of Claims 7 to 9,
**characterized in that** said pollution sensor (52) is connected by a wired or wireless link to the actuation device (40), said pollution sensor (52) being configured to emit a pollution signal (520) carrying information indicating whether the air in the external environment (EXT) is polluted.

11. System according to any one of Claims 7 to 10,
**characterized in that** said air supply system (10) comprises a forward travel sensor (53) configured to emit a forward travel signal (530) transmitted by a wired or wireless link to the actuation device (40), the forward travel signal (530) carrying information indicating that said aircraft (1) is advancing in said at least one phase of forward travel.

12. System according to any one of Claims 7 to 11,
**characterized in that** said air supply system (10) comprises a clogging sensor (54) configured to emit a clogging signal (540) transmitted by a wired or wireless link to the actuation device (40), the clogging signal (540) carrying information indicating that said filter medium (21) has a clogging level greater than or equal to a clogging threshold.

13. System according to any one of Claims 7 to 11,
**characterized in that** said air supply system (10) comprises a positioning sensor (55) configured to emit a positioning signal (550) transmitted by a wired or wireless link to the actuation device (40), the positioning signal (550) carrying information indicating the geographical position of the aircraft.

14. Aircraft (1) equipped with at least one engine (2),
**characterized in that** said aircraft (1) comprises an air supply system (10) according to any one of Claims 7 to 13 for conveying air from an external environment located outside said aircraft (1) to said engine (2).
